# DEMANDE DE BREVET EUROPEEN

(11) **EP 2 497 634 A1**
(43) Date de publication de la demande: **12.09.2012**
(21) Numéro de dépôt: 12153072.9
(22) Date de dépôt: 30.01.2012
(51) Int. Cl.: B32B 5/24, B65D 27/00, D04H 1/00, D04H 3/00

(54) **Film pour produit d'emballage, notamment une enveloppe**

(30) Priorité: 01.02.2011 FR 1150748
(71) Demandeur: Gascogne Laminates, 40100 Dax (FR)
(72) Inventeur: Chapalain, Forian, 40100 Dax (FR); Martinez, David, 40220 Tarnos (FR)
(74) Mandataire: Casalonga, Axel

(57) **Abrégé**

L'invention concerne un film 2 comportant au moins une couche d'impression 3 et une couche non-tissée 4 présentant une masse volumique inférieure à 0,5g/cm³.

L'invention concerne également un produit d'emballage, notamment une enveloppe comprenant un tel film, et un procédé d'obtention d'un film décrit ci-dessus dans lequel le film 2 est obtenu par assemblage, par exemple par extrusion lamination ou par contre-collage, d'une couche d'impression et d'une couche non-tissée.

## Description

La présente invention concerne les films pour produits d'emballage, notamment les enveloppes et plus particulièrement les enveloppes amortissantes et résistantes pour l'acheminement d'objets lourds et fragiles.

Dans les enveloppes amortissantes et résistantes pour les envois postaux, on distingue deux catégories : les enveloppes dites indéchirables pour l'envoi de documents lourds, et les enveloppes amortissantes pour l'envoi d'objets fragiles.

Pour les enveloppes dites indéchirables, les matériaux utilisés classiquement sont notamment le papier kraft armé, le triplex film papier et le matériau désigné sous la marque Tyvek. Le papier kraft armé est obtenu par assemblage d'une ou deux couches de papier avec entre les deux couches, un moyen de renfort sous la forme d'une grille en polyéthylène, polypropylène, polyester, verre ou viscose (cellulose), au moyen d'une extrusion lamination. Le papier kraft armé est très résistant à la déchirure mais est relativement lourd et ne permet pas de réaliser facilement et correctement des impressions en raison du relief créé par le moyen de renfort, ce qui limite son usage en tant que support pour de la publicité. Le Triplex film papier est obtenu par assemblage, contre-collage ou extrusion lamination de deux couches de papier avec, entre les deux, un moyen de renfort sous la forme d'un film en polypropylène. Le Triplex film papier obtenu peut présenter un grammage de 100 à 150 g/m², est facilement imprimable et est résistant mécaniquement. Cependant, tout défaut sous forme de fissure ou tout angle saillant au niveau du film plastique peut entraîner une propagation en déchirure. De plus, le moyen de renfort n'étant pas visible pour l'utilisateur, celui-ci a tendance à penser que ledit Triplex film papier n'est pas plus résistant qu'une enveloppe traditionnelle en papier. Enfin, le matériau désigné sous la marque Tyvek se présente sous la forme de feuilles et est constitué de fibres synthétiques (PEHD) thermoliées. Le Tyvek est léger (41 à 68g/m²), très résistant mécaniquement et facilement imprimable. Cependant, les enveloppes fabriquées à partir du Tyvek sont plus difficiles à obtenir avec les dispositifs classiques de transformation, et présentent un coût élevé.

Pour les enveloppes amortissantes, ils existent deux solutions actuellement : les mousses/bulles et les complexes cellulosiques. Les bulles/mousses sont obtenues par réactivation thermique de papier couché polyéthylène à deux films polyéthylène séparés de couches d'air sous formes d'alvéoles discontinues (bulles) ou à un matelas continu de polyéthylène expansé (mousse). Ces matériaux sont amortissants, mais présentent plusieurs inconvénients : ils sont épais (1000 à 4000µm), présentent de faibles propriétés mécaniques et sont difficilement imprimables à posteriori, en raison du relief créé par les bulles. De plus, la fabrication de telles enveloppes nécessite des machines spécifiques. Les complexes cellulosiques, par exemple celui connu sous la marque Sumo, sont obtenus par assemblage de deux couches de papier rembourrées par du papier recyclé sous différentes formes (feuilles de papiers collées, bandes de papier découpées ou papiers broyés). Ces matériaux présentent un bon amortissement aux chocs, mais sont aussi lourds (supérieurs à 300 g/m²), épais (jusqu'à 5000 µm), difficilement imprimables, sensibles à l'eau/humidité, et peu résistants mécaniquement.

Un but de la présente invention est donc de proposer un film pour produit d'emballage, notamment pour enveloppe, permettant de résoudre les problèmes techniques présentés précédemment. En particulier, un but de l'invention est de proposer un film qui permet à la fois de protéger des objets de chocs ou rayures, et de présenter une résistance mécanique et une imperméabilité élevées, ainsi qu'une facilité d'impression, afin de permettre l'envoi postal d'objets à la fois lourds et fragiles. Un autre but de l'invention est de proposer un film pour enveloppe pouvant être fabriqué sur des machines conventionnelles, par exemple sur des machines pour kraft armé.

A cet effet, dans un mode de réalisation, il est proposé un film comprenant au moins une couche d'impression et une couche non-tissée présentant une masse volumique inférieure ou égale à 0,5 g/cm³, par exemple comprise entre 0,001 g/cm³ et 0,5 g/cm³.

On entend par film une feuille en matière souple ou rigide qui peut être découpée et/ou pliée de manière à obtenir par exemple une enveloppe ou un produit d'emballage. L'utilisation d'une couche non-tissée particulière permet d'une part une fabrication aisée avec des machines conventionnelles, et d'autres part d'obtenir à la fois une résistance mécanique et une protection contre les chocs et les rayures. Il est ainsi possible d'utiliser de telles enveloppes pour envoyer par colis postal, des objets lourds et sensibles aux rayures ou aux chocs. La couche non-tissée est de préférence un enchevêtrement aléatoire de fibres assemblées de différentes façons. La couche non-tissée peut être obtenue par voie sèche (par exemple par cardage et aiguilletage), par voie humide ou par voie thermique (par exemple par voie fondue).

La couche non-tissée présente une masse volumique inférieure ou égale à 0,5 g/cm³, par exemple comprise entre 0,001 g/cm³ et 0,5 g/cm³, de préférence inférieure ou égale à 0,1 g/cm³, par exemple comprise entre 0,001 g/cm³ et 0,1 g/cm³, et encore plus préférentiellement inférieure ou égale à 0,05 g/cm³, par exemple comprise entre 0,001 g/cm³ et 0,05 g/cm³. La couche de non-tissée présentant une masse volumique telle que définie précédemment permet à la fois d'amortir les chocs, et de résister au déchirement.

La couche non-tissée peut présenter un grammage mesuré selon la norme ISO 536, compris entre 40 et 150g/m², de préférence entre 40 et 120g/m², et encore plus préférentiellement entre 40 et 80g/m².

La couche non-tissée peut aussi présenter une épaisseur mesurée selon la norme ISO 534 (épaisseur mesurée avec une pression de 100kPa), comprise entre 50 et 2000µm, de préférence entre 100 et 500 µm. La couche non-tissée peut présenter une épaisseur mesurée selon la norme ISO9073 (épaisseur mesurée avec une pression de 0,5kPa) comprise entre 1000 et 2500µm, de préférence entre 1500 et 2000µm.

Le changement de grammage et/ou d'épaisseur de la couche non-tissée peuvent permettre d'adapter les propriétés de l'enveloppe, notamment son poids, son amortissement, son épaisseur, etc.

Ainsi, par rapport à une couche de papier classique, la couche non-tissée forme un matelas amortissant grâce à sa faible densité et sa grande déformabilité, ce qui permet de limiter la transmission des chocs entre l'extérieur de l'enveloppe et l'intérieur de l'enveloppe où est placé le produit.

La couche non-tissée peut être distincte de la couche d'impression.

La couche non-tissée peut comprendre une couche non-tissée de polyéthylène téréphtalate. Le non-tissé de polyéthylène téréphtalate permet d'obtenir la facilité de fabrication recherchée tout en conservant les propriétés mécaniques voulues.

La couche d'impression peut être une couche fibreuse, notamment une couche cellulosique, ou une couche plastique. La couche d'impression permet notamment de fournir un support pour la couche non-tissée et une surface d'impression pour le film. De plus, la couche d'impression fournit également au film une rigidité permettant sa fabrication.

La couche d'impression peut ainsi comprendre du papier ou du carton, de préférence avec un grammage mesuré selon la norme ISO 536, compris entre 10 et 500g/m², de préférence entre 10 et 300g/m², et plus préférentiellement entre 20 et 250 g/m². Le papier peut être du papier blanc ou brun, permettant une impression aisée, par exemple du papier recyclé.

La couche d'impression peut comprendre également de l'encre d'impression.

Selon un mode de réalisation, le film peut être constitué d'une couche d'impression comportant éventuellement de l'encre d'impression, d'une couche non-tissée présentant une masse volumique inférieure ou égale à 0,5 g/cm³, et éventuellement d'une couche de colle entre la couche d'impression et la couche non-tissée. La couche de colle, ou couche d'assemblage, permet de maintenir ensemble, par adhérence durable, la couche d'impression et la couche non-tissée en contact. La couche de colle peut également augmenter l'imperméabilité du film. La couche de colle peut être par exemple une couche d'extrusion lamination en polyéthylène.

Ainsi, selon un premier mode de réalisation, le film peut être constitué d'une couche d'impression et d'une couche non-tissée présentant une masse volumique inférieure ou égale à 0,5 g/cm³.

Selon un deuxième mode de réalisation, le film peut être constitué d'une couche d'impression comportant de l'encre d'impression et d'une couche non-tissée présentant une masse volumique inférieure ou égale à 0,5 g/cm³.

Selon un troisième mode de réalisation, le film peut être constitué d'une couche d'impression, d'une couche non-tissée présentant une masse volumique inférieure ou égale à 0,5 g/cm³, et d'une couche de colle entre la couche d'impression et la couche non-tissée.

Selon un quatrième mode de réalisation, le film peut être constitué d'une couche d'impression comportant de l'encre d'impression, d'une couche non-tissée présentant une masse volumique inférieure ou égale à 0,5 g/cm³, et d'une couche de colle entre la couche d'impression et la couche non-tissée.

Avantageusement, la couche non-tissée est sur la partie intérieure du film, et la couche d'impression est sur la partie extérieure du film.

La couche non-tissée peut être fixée sur la couche d'impression par contre-collage (par exemple lamination à la colle), ou par extrusion lamination par exemple avec une couche de polyéthylène.

Selon un autre aspect, l'invention concerne également un produit d'emballage, notamment une enveloppe, comprenant un film décrit précédemment.

On entend par enveloppe un film plié de manière à pouvoir contenir une lettre, une carte, un objet, etc. L'enveloppe peut être constituée du film précédemment décrit.

Selon un autre aspect, l'invention concerne également un procédé d'obtention d'un film décrit ci-dessus dans lequel le film est obtenu par assemblage de la couche d'impression et de la couche non-tissée.

L'assemblage peut être obtenu par contre-collage, par exemple à la cire, ou par extrusion lamination, par exemple avec une couche de polyéthylène.

D'autres avantages et caractéristiques apparaîtront à l'examen de la description détaillée d'un mode de réalisation particulier, pris à titre d'exemple nullement limitatif et illustré par les dessins annexés, sur lesquels :
- la figure 1 représente schématiquement un film selon l'invention ; et
- la figure 2 représente schématiquement une enveloppe amortissante selon l'invention.

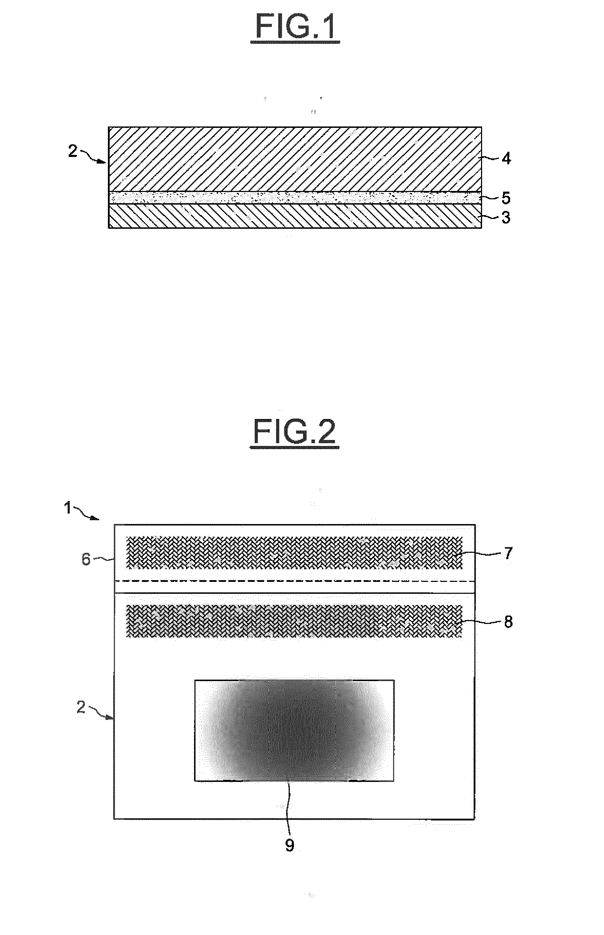

Sur la figure 1, on a représenté, de manière très schématique, une section d'une enveloppe 1 (voir figure 2) sous la forme d'un film 2. Le film 2 comprend une couche d'impression 3, par exemple du papier ou du carton, et une couche non-tissée 4. Le film 2 peut également comprendre une couche de colle 5, entre la couche d'impression 3 et la couche non-tissée 4.

Le film 2 peut comprendre, voire être constitué, de 2 plis ou couches, avec éventuellement une couche de colle. La première couche 3 peut être une couche de papier blanc, par exemple du papier recyclé, ou du carton. La première couche 3 peut également être imprimée, sur une partie ou la totalité de sa face extérieure, avec une encre d'impression. La première couche 3 peut présenter un grammage mesuré selon la norme ISO 536, compris entre 10 et 500 g/m², de préférence entre 20 et 250 g/m².

La deuxième couche 4 est une couche non-tissée, par exemple de polyéthylène téréphtalate. La couche non-tissée 4 est par exemple obtenue par voie sèche (par exemple par cardage et aiguilletage), par voie humide ou par voie thermique (par exemple fondue). La couche non-tissée présente une masse volumique inférieure à 0,5g/cm³. La couche non-tissée peut aussi présenter un grammage compris entre 40 et 150 g/m², et peut être fixée à la surface intérieure de la couche d'impression par une couche 5 adhésive de polyéthylène par exemple. La couche non-tissée 4 peut présenter une épaisseur mesurée selon la norme ISO 9073/2 comprise entre 1000 et 2500 µm.

La couche non-tissée 4 permet ainsi de protéger les objets introduits dans l'enveloppe contre les rayures, et de les protéger contre les chocs. En effet, grâce à l'épaisseur de la couche 4 non-tissée, et à sa compressibilité, celle-ci peut se déformer sous les chocs, et ainsi en absorber une partie. Contrairement à une couche de papier classique, la couche 4 non-tissée permet une plus faible transmission des chocs de part et d'autre de son épaisseur.

La figure 2 représente une enveloppe 1 selon l'invention. L'enveloppe 1 comprend, voire est constituée du film 2 décrit à la figure 1. L'enveloppe 1 peut également comprendre des rabats latéraux et une patte de fermeture 6 lorsque l'ouverture est selon la longueur de l'enveloppe, ou une patte de fond et une patte de fermeture lorsque l'ouverture est selon la largeur de l'enveloppe. Les rabats latéraux et/ou les pattes peuvent être formées par le film 2. L'enveloppe peut également comprendre des zones de collage 7, 8 au niveau de la patte de fermeture 6, permettant une fermeture solide et résistante de l'enveloppe lorsque l'objet à envoyer y a été inséré. En particulier, les couches d'impression 3 et non-tissée 4 sont choisies de manière à être compatibles avec les couches de colle traditionnelles utilisées pour la confection des enveloppes, notamment les couches de colle utilisées pour fixer les pattes de fond et/ou les pattes de fermeture.

Enfin, l'enveloppe 1 peut également comprendre une zone d'impression 9, pouvant recouvrir une partie ou la totalité de la surface de la couche d'impression 3. Cette zone d'impression 9 est particulièrement aisée à réaliser grâce à l'épaisseur homogène et relativement faible de l'enveloppe 1, contrairement aux enveloppes à bulles par exemple.

Par ailleurs, l'enveloppe ainsi obtenue présente une épaisseur et un poids limités, adaptés aux envois postaux. De plus, l'enveloppe ainsi conçue permet aussi de conserver des objets sensibles à l'humidité.

A titre d'exemples, trois compositions de films pour enveloppes amortissantes sont mentionnées ci-dessous.

### Exemple 1 :

Le film selon le premier exemple est constitué de :
- une couche de papier blanchi recyclé présentant un grammage de 48 g/m²
- une couche de polyéthylène présentant un grammage de 15 g/m²
- une couche non-tissée de polyéthylène téréphtalate présentant un grammage de 60 g/m² et une épaisseur de 1850 µm selon la norme ISO 9073/2, obtenue par cardage puis aiguilletage.

La couche non-tissée présente donc une masse volumique d'environ 0,032 g/cm³. Le film de cet exemple présente notamment une épaisseur totale (mesurée selon la norme ISO 534) de 350 µm, plus ou moins 50µm.

### Exemple 2 :

Dans un deuxième exemple, le film est constitué de :
- une couche de papier blanchi et pure pâte présentant un grammage de 70 g/m²
- une couche de polyéthylène présentant un grammage de 15 g/m²
- une couche non-tissée de polyéthylène téréphtalate présentant un grammage de 60 g/m² et une épaisseur de 1850 µm selon la norme ISO 9073/2, obtenue par cardage puis aiguilletage.

La couche non-tissée présente donc une masse volumique d'environ 0,032 g/cm³. Le film de cet exemple présente notamment une épaisseur totale (mesurée selon la norme ISO 534) de 400 µm, plus ou moins 50µm.

### Exemple 3 :

Dans un troisième exemple, le film est constitué de :
- une couche de papier kraft écru présentant un grammage de 50 g/m²
- une couche de polyéthylène présentant un grammage de 23 g/m²
- une grille de polyéthylène téréphtalate présentant un grammage de 6 g/m², avec des motifs carrés de 0,8 cm de côté,
- une couche non-tissée de polyéthylène téréphtalate présentant un grammage de 60 g/m² et une épaisseur de 1800µm selon la norme ISO 9073/2, obtenue par thermoliage.

La couche non-tissée présente donc une masse volumique d'environ 0,033 g/cm³. Le film de cet exemple présente notamment une épaisseur totale (mesurée selon la norme ISO 534) de 360 µm, plus ou moins 50µm.

On obtient ainsi une enveloppe présentant un gain en volume et en poids important par rapport aux enveloppes à bulles par exemple, tout en garantissant une protection aux rayures et aux chocs satisfaisante, ainsi qu'une résistance au déchirement et à l'éclatement élevée. Par ailleurs, la couche non-tissée permet également d'obtenir une protection homogène à l'intérieur de l'enveloppe.

Alternativement, le film décrit précédemment peut également être utilisé pour former des sacs ou tout autre produit d'emballage ou de conditionnement nécessitant une résistance à la rupture élevée et une protection contre les chocs.

## Revendications

1. Film (2) comprenant au moins une couche d'impression (3) et une couche non-tissée (4) présentant une masse volumique inférieure ou égale à 0,5 g/cm³.

2. Film (2) selon la revendication 1 dans lequel la couche non-tissée (4) est distincte de la couche d'impression (3).

3. Film (2) selon l'une des revendications précédentes dans lequel la couche non-tissée (4) présente une masse volumique inférieure ou égale à 0,1g/cm³, de préférence inférieure ou égale à 0,05g/cm³.

4. Film (2) selon l'une des revendications précédentes dans lequel la couche non-tissée (4) présente un grammage mesuré selon la norme ISO 536, compris entre 40 et 150g/m², de préférence entre 40 et 80 g/m².

5. Film (2) selon l'une des revendications précédentes dans lequel la couche (4) non-tissée est obtenue par voie sèche, par voie humide ou par voie thermique.

6. Film (2) selon l'une des revendications précédentes dans lequel la couche non-tissée (4) présente une épaisseur mesurée selon la norme ISO 9073/2 comprise entre 1000 et 2500 µm, de préférence entre 1500 et 2000 µm.

7. Film (2) selon l'une des revendications précédentes dans lequel la couche d'impression (3) comprend également de l'encre d'impression.

8. Film (2) selon l'une des revendications précédentes constitué d'une couche d'impression (3), éventuellement de l'encre d'impression, d'une couche non-tissée (4) présentant une masse volumique inférieure ou égale à 0,5 g/cm³ et éventuellement d'une couche de colle (5) entre la couche d'impression et la couche non-tissée, par exemple une couche de polyéthylène.

9. Produit d'emballage, notamment enveloppe (1), comprenant un film selon l'une des revendications précédentes.

10. Procédé d'obtention d'un film (2) selon l'une des revendications 1 à 8 obtenu par assemblage, par exemple par extrusion lamination ou par contre-collage, d'une couche d'impression et d'une couche non-tissée.
